# FASCICULE DE BREVET EUROPEEN

(11) **EP 3 631 241 B1**
(45) Date de publication et mention de la délivrance du brevet: **21.07.2021**
(21) Numéro de dépôt: 18729733.8
(22) Date de dépôt: 17.05.2018
(51) Int. Cl.: F16H 1/32

(54) **DISPOSITIF MÉCANIQUE À ARBRE À EXCENTRIQUE EMMANCHÉ EN FORCE SUR UNE PIÈCE D'ÉQUILIBRAGE**
MECHANISCHE VORRICHTUNG MIT EXZENTRISCHER, AUF EIN AUSWUCHTTEIL GEPRESSTER WELLE
MECHANICAL DEVICE WITH ECCENTRIC SHAFT PRESS-FITTED ONTO A BALANCING PART

(30) Priorité: 01.06.2017 FR 1754851
(43) Date de publication de la demande: 08.04.2020
(73) Titulaire: PSA Automobiles SA, 78300 Poissy (FR)
(72) Inventeur: LELASSEUX, Xavier, 92000 Nanterre (FR); MITUKIEWICZ, Grzegorz, 93569 Lodz (PL)
(86) Numéro de dépôt international: PCT/FR2018/051188
(87) Numéro de publication internationale: WO 2018/220309

(56) Documents cités:
- EP-A1- 1 174 641
- DE-U1- 29 703 651
- US-A- 1 392 508

## Description

L'invention concerne les dispositifs mécaniques qui comprennent un arbre dit primaire ayant une partie excentrique devant avoir des masses d'équilibrage pour centrer les masses inertielles.

Certains dispositifs, comme par exemple certains réducteurs, comprennent un arbre (dit primaire) ayant deux parties terminales opposées, ayant un premier axe de rotation, et séparées par une partie intermédiaire ayant un second axe de rotation excentré par rapport au premier axe de rotation. C'est notamment le cas de certains réducteurs qui sont couplés à une machine (ou un moteur) électrique ou qui font partie d'un équipement de couplage équipant par exemple un véhicule, éventuellement automobile.

L'arbre primaire (à rotation rapide et à excentrique) est par exemple couplé à un arbre secondaire (à rotation lente) via des premier et second engrenages à satellite, par exemple de type hypocycloïdal, et définissant respectivement des premier et second étages de réduction décalés axialement.

L'excentricité de l'arbre primaire introduisant un balourd (et plus précisément des masses excentrées (satellites et partie excentrique)), il a été proposé, notamment dans les documents brevet FR 2657131 et US 4,604,916, d'adjoindre à cet arbre primaire des masses d'équilibrage (par exemple deux) destinées à déplacer le centre de gravité global. L'adjonction de chaque masse d'équilibrage se fait actuellement par soudage, ou par une liaison cannelée, ou encore par une goupille ou une clavette.

On connait par exemple des documents de brevet EP-A1-1174641 ou DE-U1-29703651 de tels réducteurs.

Or, ce type d'adjonction s'avère onéreux et peut complexifier l'usinage. En outre, l'adjonction peut se faire à un endroit qui n'est pas précisément celui qui a été prédéfini en raison d'une difficulté ou impossibilité d'indexage, et dans ce cas l'équilibrage n'est pas parfait et donc induit des vibrations qui provoquent des bruits et une usure accélérée.

L'invention a donc notamment pour but d'améliorer la situation.

Elle propose à cet effet un dispositif mécanique, éventuellement de réduction de régime, et comprenant un arbre (primaire) ayant deux parties terminales opposées, ayant un premier axe de rotation et séparées par une partie intermédiaire de l'arbre ayant un second axe de rotation excentré par rapport au premier axe de rotation, ce dispositif mécanique comprenant également une pièce comprenant :
- une première partie définissant une première masse d'équilibrage et comprenant un premier alésage interne centré sur le premier axe de rotation et logeant partiellement l'une des parties terminales de l'arbre avec un premier couplage, et
- une seconde partie définissant une seconde masse d'équilibrage et comprenant un second alésage interne centré sur le second axe de rotation et logeant partiellement la partie intermédiaire de l'arbre avec un second couplage, cette seconde partie de la pièce présentant un centre de gravité situé suivant un troisième axe situé à l'opposé du second axe de rotation par rapport au premier axe de rotation afin d'induire un équilibrage de masses excentrées.

Ce dispositif mécanique se caractérise par le fait que l'un au moins des premier et second couplages peut être serré.

Ainsi, les masses d'équilibrage que définit la pièce peuvent être avantageusement adjointes à l'arbre primaire par emmanchement en force de ce dernier, et donc sans qu'il faille réaliser une opération de soudage, ou utiliser une liaison cannelée ou une goupille ou encore une clavette.

Le dispositif mécanique selon l'invention peut comporter d'autres caractéristiques qui peuvent être prises séparément ou en combinaison, et notamment :
- la seconde partie de la pièce peut présenter une section transverse elliptique ;
- le premier couplage peut être réalisé via un premier étagement défini au niveau d'une première interface entre la première partie de la pièce et la partie terminale de l'arbre qui est logée dans le premier alésage interne, et le second couplage peut être réalisé via un second étagement défini au niveau d'une seconde interface entre la seconde partie de la pièce et la partie intermédiaire de l'arbre ;
   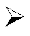 le premier étagement peut être défini sur la partie terminale de l'arbre logée dans le premier alésage interne ;
   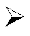 le second étagement peut être défini sur la partie intermédiaire de l'arbre.

L'invention propose également un équipement de couplage comprenant au moins un dispositif mécanique du type de celui présenté ci-avant.

Par exemple, un tel équipement peut constituer une boîte de vitesses.

L'invention propose également un véhicule, éventuellement de type automobile, et comprenant une chaîne de transmission comportant au moins un dispositif mécanique du type de celui présenté ci-avant et/ou au moins un équipement de couplage du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en coupe dans un plan longitudinal, un exemple de réalisation d'une partie d'un dispositif mécanique selon l'invention, et
- la figure 2 illustre schématiquement, dans une vue de face du côté avant, la partie du dispositif mécanique de la figure 1.

L'invention a notamment pour but de proposer un dispositif mécanique DM à arbre primaire AP à excentrique emmanché en force sur une pièce d'équilibrage PM.

Dans ce qui suit, on considère, à titre d'exemple non limitatif, que le dispositif mécanique DM est un réducteur de régime destiné à équiper un véhicule automobile, comme par exemple une voiture. Mais l'invention n'est pas limitée à cette application. En effet, un dispositif mécanique selon l'invention peut être couplé à n'importe quel(le) machine (ou moteur) électrique ou faire partie d'un équipement de couplage (comme par exemple une boîte de vitesses). Par conséquent, un dispositif mécanique selon l'invention peut équiper un véhicule (terrestre, maritime (ou fluvial), ou aérien), une installation, éventuellement de type industriel, ou un bâtiment, par exemple.

Par ailleurs, on considère dans ce qui suit, à titre d'exemple non limitatif, que le dispositif mécanique DM est destiné à être couplé à une machine motrice électrique faisant partie d'une chaîne de transmission d'un véhicule de type hybride ou tout électrique. On entend ici par « machine motrice électrique » une machine (ou un moteur) électrique agencé(e) de manière à fournir ou récupérer du couple pour déplacer un véhicule, soit seul(e) soit en complément d'au moins une éventuelle autre machine motrice électrique ou thermique (comme par exemple un moteur thermique).

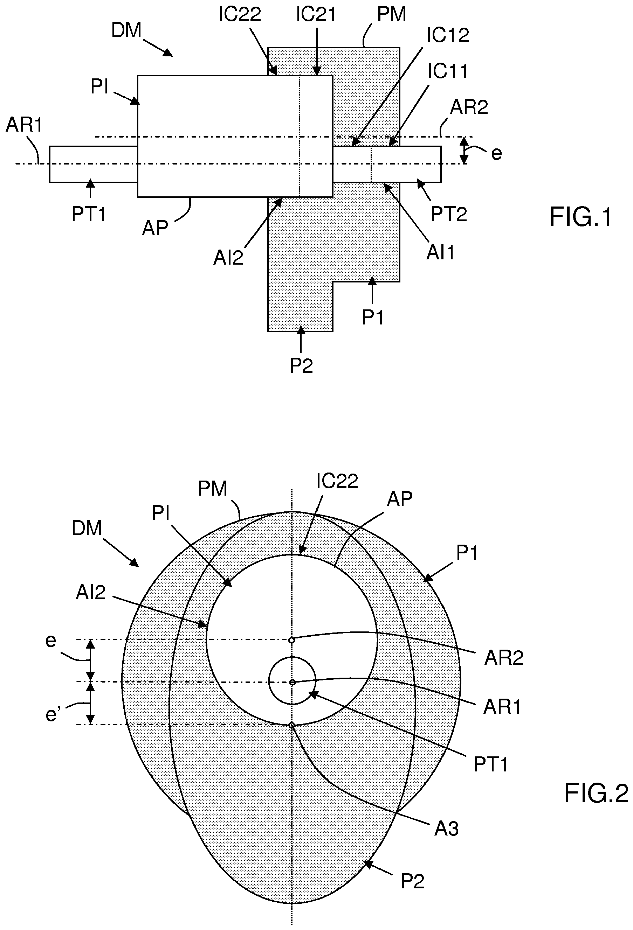

On a schématiquement représenté sur les figures 1 et 2 un exemple de réalisation d'une partie d'un dispositif mécanique DM (ici un réducteur de régime) selon l'invention. Cette partie représentée ne comprend qu'un arbre primaire AP à excentrique et une pièce d'équilibrage PM.

Cet arbre primaire AP comprend deux parties terminales PTj (j = 1 ou 2) opposées entre elles et séparées par une partie intermédiaire PI.

Ces deux parties terminales PTj ont un premier axe de rotation AR1. On notera que dans l'exemple illustré non limitativement sur la figure 1, les deux parties terminales PTj ont un même premier diamètre, mais cela n'est pas obligatoire.

Par exemple, la première partie terminale PT1 (j = 1), située sur une face avant, peut-être destinée à être solidarisée à l'axe de sortie d'une machine électrique ayant une première vitesse de rotation (ou un premier régime), éventuellement variable dans le temps.

La seconde partie terminale PT2 (j = 2), située sur une face arrière, est montée à rotation sur un palier.

La partie intermédiaire PI de l'arbre primaire AP a un second axe de rotation AR2 qui est excentré d'une distance e par rapport au premier axe de rotation AR1. Cette partie intermédiaire PI peut-être destinée de manière non limitative à recevoir des premier et second engrenages à satellite(s), par exemple de type hypocycloïdal ou épicycloïdal, définissant respectivement des premier et second étages de réduction décalés axialement, et assurant le couplage de son arbre primaire AP à un arbre secondaire. On comprendra que ces premier et second engrenages à satellite(s) sont chargés de transformer la première vitesse de rotation de l'arbre primaire AP en une seconde vitesse de rotation de l'arbre secondaire, strictement inférieure à cette première vitesse de rotation.

L'invention ne portant pas sur les premier et second engrenages à satellite(s), ces derniers ne seront pas décrits ci-après.

La pièce (d'équilibrage) PM comprend des première P1 et seconde P2 parties qui se prolongent mutuellement en étant solidarisées fixement l'une à l'autre. On notera que cette pièce (d'équilibrage) PM est de préférence monobloc. Mais cela n'est pas obligatoire. En effet elle pourrait être constituée par solidarisation fixe de sa première partie P1 à sa seconde partie P2, par exemple par soudage.

La première partie P1 de la pièce PM définit une première masse d'équilibrage et comprend un premier alésage interne AI1 qui est centré sur le premier axe de rotation AR1 et qui loge partiellement l'une des parties terminales PTj (ici la seconde PT2) avec un premier couplage.

Par exemple, et comme illustré non limitativement sur la figure 2, la première partie P1 de la pièce PM peut présenter une section transverse circulaire.

La seconde partie P2 de la pièce PM définit une seconde masse d'équilibrage et comprend un second alésage interne AI2 qui est centré sur le second axe de rotation AR2 et qui loge la partie intermédiaire PI avec un second couplage. Ce logement est partiel car une sous-partie de cette seconde partie P2 doit être située à l'extérieur du second alésage interne AI2 afin de pouvoir être couplée aux premier et second engrenages assurant le couplage à l'axe secondaire.

Par exemple, et comme illustré non limitativement sur la figure 2, la seconde partie P2 de la pièce PM peut présenter une section transverse elliptique.

Ces première P1 et seconde P2 masses d'équilibrage ont un centre de gravité situé dans un plan qui comprend le centre de gravité excentré des masses excentrées (du fait de l'existence de l'excentricité e) et qui est orthogonal au premier axe de rotation AR1 de l'arbre primaire AP, ce qui permet de recentrer le centre de gravité global. On entend ici par « masses excentrées » les satellites des premier et second engrenages et la partie excentrique de l'arbre primaire AP (présente dans la seconde partie P2 de ce dernier (AP)), ainsi que toute pièce intermédiaire située entre ces satellites et l'excentrique.

Par exemple, la seconde partie P2 de la pièce PM peut présenter un centre de gravité qui est situé suivant un troisième axe A3 situé à l'opposé du second axe de rotation AR2 par rapport au premier axe de rotation AR1 afin d'induire l'équilibrage des masses excentrées. La distance e' séparant le troisième axe A3 du premier axe de rotation AR1 est donc égale à l'excentricité e.

Les premier et second couplages résultent d'un emmanchement en force des seconde partie terminale PT2 et partie intermédiaire PI de l'arbre primaire AP respectivement dans les premier AI1 et second AI2 alésages internes de la pièce PM. Par conséquent, l'adjonction des masses d'équilibrage à l'arbre primaire AP ne nécessite plus d'opération de soudage, ou d'utilisation d'une liaison cannelée, d'une goupille ou d'une clavette. Il en résulte une réduction des coûts, une simplification de l'usinage, et une possibilité d'indexage par les alésages internes AI1 et AI2 qui garantit le positionnement des masses d'équilibrage à l'endroit de l'arbre primaire AP qui a été prédéfini. En d'autres termes, l'invention garantit un bon équilibrage et donc l'absence (quasi-totale) de vibrations, ce qui évite la génération de bruit et l'usure accélérée.

On notera que l'un au moins des premier et second couplages peut être serré. En d'autres termes, selon les besoins on peut avoir soit seulement le premier couplage serré, soit seulement le second couplage serré, soit encore à la fois le premier couplage serré et le second couplage serré.

Afin de faciliter l'emmanchement en force, les premier et second couplages peuvent, par exemple, être réalisés via respectivement des premier et second étagements. Ce premier étagement est défini au niveau d'une première interface IC11, IC12 entre la première partie P1 de la pièce PM et la seconde partie terminale PT2 de l'arbre primaire AP (logée dans le premier alésage interne AI1). Le second étagement est défini au niveau d'une seconde interface IC21, IC22 entre la seconde partie P2 de la pièce PM et la partie intermédiaire PI de l'arbre primaire AP.

On entend ici par « étagement » la définition d'au moins deux paliers placés à des distances radiales différentes. Dans l'exemple illustré non limitativement sur la figure 1, chaque étagement ne comprend que deux paliers (IC11 et IC12) ou (IC21 et IC22). Mais chaque étagement pourrait comprendre plus de deux paliers, par exemple trois ou quatre.

Chaque étagement permet de pré-positionner sans effort l'arbre primaire AP dans les alésages internes AI1 et AI2, puis de finaliser le couplage axial par un emmanchement en force sur le(s) palier(s) offrant le contact le plus serré.

A titre d'exemple, on peut définir un premier palier d'étagement de type glissant dans une première sous-partie IC11 de la première interface et/ou un premier palier d'étagement de type glissant dans une première sous-partie IC21 de la seconde interface, afin de pouvoir pré-positionner l'arbre primaire AP sans forcer en indexant sa position angulaire facilement. A cet effet, chaque premier palier d'étagement peut, par exemple, être de type dit H7/h6 ou H7/g6.

Dans ce cas, on peut définir un second palier d'étagement de type serrant dans une seconde sous-partie IC12 de la première interface et/ou un second palier d'étagement de type serrant dans une seconde sous-partie IC22 de la seconde interface, afin de d'obtenir un positionnement axial serrant sans ajout supplémentaire de butée axiale de type circlips ou écrou. A cet effet, chaque second palier d'étagement peut, par exemple, être de type dit H7/m6 ou H7/p6.

Par exemple, le premier étagement peut être défini sur la seconde partie terminale PT2 de l'arbre primaire AP (logée dans le premier alésage interne AI1). Mais dans une variante, le premier étagement pourrait être défini dans le premier alésage interne AI1 accueillant la seconde partie terminale PT2 de l'arbre primaire AP.

Egalement par exemple, le second étagement peut être défini sur la partie intermédiaire PI de l'arbre primaire AP. Mais dans une variante, le second étagement pourrait être défini dans le second alésage interne AI2 accueillant la seconde partie intermédiaire PI de l'arbre primaire AP.

On notera également que dans une variante de réalisation, on pourrait remplacer chaque étagement par une variation monotone (croissante ou décroissante selon l'élément concerné).

## Revendications

1. Dispositif mécanique (DM) comprenant un arbre (AP) ayant deux parties terminales (PTj) opposées, ayant un premier axe de rotation (AR1), et séparées par une partie intermédiaire (PI) dudit arbre (AP) ayant un second axe de rotation (AR2) excentré par rapport audit premier axe de rotation (AR1), ledit dispositif mécanique (DM) comprenant en outre une pièce (PM) comprenant une première partie (P1) définissant une première masse d'équilibrage et comprenant un premier alésage interne (AI1) centré sur ledit premier axe de rotation (AR1) et logeant partiellement l'une desdites parties terminales (PTj) avec un premier couplage, et une seconde partie (P2) définissant une seconde masse d'équilibrage et comprenant un second alésage interne (AI2) centré sur ledit second axe de rotation (AR2) et logeant partiellement ladite partie intermédiaire (PI) avec un second couplage, ladite seconde partie (P2) de la pièce (PM) présentant un centre de gravité situé suivant un troisième axe situé à l'opposé dudit second axe de rotation (AR2) par rapport audit premier axe de rotation (AR1) afin d'induire un équilibrage de masses excentrées, **caractérisé en ce que** l'un au moins desdits premier et second couplages est serré.

2. Dispositif selon la revendication 1, **caractérisé en ce que** ladite seconde partie (P2) de la pièce (PM) présente une section transverse elliptique.

3. Dispositif selon l'une des revendications 1 à 2, **caractérisé en ce que** ledit premier couplage est réalisé via un premier étagement défini au niveau d'une première interface (IC11, IC12) entre ladite première partie (P1) de la pièce (PM) et ladite partie terminale (PT2) de l'arbre (AP) logée dans ledit premier alésage interne (AI1), et ledit second couplage est réalisé via un second étagement défini au niveau d'une seconde interface (IC21, IC22) entre ladite seconde partie (P2) de la pièce (PM) et ladite partie intermédiaire (PI) de l'arbre (AP).

4. Dispositif selon la revendication 3, **caractérisé en ce que** ledit premier étagement est défini sur ladite partie terminale (PT2) de l'arbre (AP) logée dans ledit premier alésage interne (AI1).

5. Dispositif selon la revendication 3 ou 4, **caractérisé en ce que** ledit second étagement est défini sur ladite partie intermédiaire (PI) de l'arbre (AP).

6. Equipement de couplage, **caractérisé en ce qu'**il comprend au moins un dispositif mécanique (DM) selon l'une des revendications précédentes.

7. Equipement selon la revendication 6, **caractérisé en ce qu'**il constitue une boîte de vitesses.

8. Véhicule comprenant une chaîne de transmission, **caractérisé en ce que** ladite chaîne de transmission comprend au moins un dispositif mécanique (DM) selon l'une des revendications 1 à 5 et/ou au moins un équipement de couplage selon la revendication 6 ou 7.

## Patentansprüche

1. Mechanische Vorrichtung (DM) mit einer Welle (AP), die zwei gegenüberliegende Endteile (PTj), mit einer ersten Drehachse (AR1), und getrennt durch einen Zwischenteil (PI) der genannte Welle (AP) mit einer zweiten Achse Drehachse (AR2) exzentrisch in Bezug auf die erste Drehachse (AR1), wobei die mechanische Vorrichtung (DM) ferner einen Teil (PM) umfasst, der einen ersten Teil (P1) umfasst, der eine erste Ausgleichsmasse definiert und umfasst a erste Innenbohrung (AI1) der auf der ersten Drehachse (AR1) zentriert ist und einen der Endteile (PTj) teilweise mit einer ersten Kupplung aufnimmt, und einen zweiten Teil (P2), der eine zweite Ausgleichsmasse definiert und eine zweite Innenbohrung (AI2) umfasst, die auf dem zentriert ist zweite Achse (AR2) und Gehäuse teilweise der Abschnitt Zwischen (PI) mit einer zweiten Kupplung, wobei die zweite Abschnitt (P2) des Werkstückes (PM) vorhanden ant ein Zentrum der Schwerkraft entlang einer dritten Achse im ,gegenüberliegenden wobei die zweiten Drehachse (AR2) in Bezug auf die erste Drehachse (AR1), um einen Ausgleich exzentrischer Massen zu bewirken, **dadurch gekennzeichnet**, dassmindestens eine der ersten und zweiten Kupplungen dicht ist.

2. Vorrichtung nach Anspruch 1, **dadurch gekennzeichnet, dass** der zweite Teil (P2) des Teils (PM) einen elliptischen Querschnitt hat.

3. Vorrichtung nach einem des Anspruch 1 bis 2, **dadurch gekennzeichnet, dass** die ersten Kopplungs über realisierte einen ersten Zwischenspeicher an einer ersten Schnittstelle definiert (IC11, IC12) zwischen dem ersten Abschnitt (P1) des Werkstückes (PM) und dem Endteil (PT2) der Welle (AP), die in der ersten Innenbohrung (AI1) untergebracht ist, und die zweite Kupplung erfolgt über einen zweiten Schritt, der an einer zweiten Schnittstelle (IC21, IC22) zwischen dem zweiten Teil (P2) der Teil (PM) und das Zwischenteil (PI) der Welle (AP).

4. Vorrichtung nach Anspruch 3, **dadurch gekennzeichnet, dass** die erste Stufe an dem Endteil (PT2) der Welle (AP) definiert ist, die in der ersten Innenbohrung (AI1) untergebracht ist.

5. Vorrichtung nach Anspruch 3 oder 4, **dadurch gekennzeichnet, dass** die zweite Stufe auf dem Zwischenteil (PI) der Welle (AP) definiert ist.

6. Kupplungsausrüstung, **dadurch gekennzeichnet, dass** sie mindestens eine mechanische Vorrichtung (DM) nach einem der vorhergehenden Ansprüche umfasst.

7. Einrichtung nach Anspruch 6, **dadurch gekennzeichnet, dass** sie ein Getriebe bildet.

8. Fahrzeug, umfassend eine Sendekette, **dadurch gekennzeichnet, daß** die Übertragungskette umfaßt mindestens eine mechanische Vorrichtung (DM) nach einem der Ansprüche 1
bis 5 und/oder zumindest Kupplungsausrüstung nach an Anspruch 6 oder 7.

## Claims

1. Mechanical device (DM) comprising a shaft (AP) having two opposite end parts (PTj), having a first axis of rotation (AR1), and separated
by an intermediate part (PI) of said shaft (AP) having a second axis of rotation (AR2) eccentric with respect to said first axis of rotation (AR1), said mechanical device (DM) further comprising a part (PM) comprising a first part (P1) defining a first balancing mass and comprising a first internal bore (AI1) centered on said first axis of rotation (AR1) and partially housing one of said end parts (PTj) with a first coupling, and a second part (P2) defining a second balancing mass and comprising a second internal bore (AI2) centered on said second axis (AR2) and housing partially said portion intermediate (PI) with a second coupling, said second portion (P2) of the workpiece (PM) present ant a center of gravity along a third axis located at opposite of said second axis of rotation (AR2) with respect to said first axis of rotation (AR1) in order to induce a balancing of eccentric masses, characterized in thatat least one of said first and second couplings is tight.

2. Device according to claim 1, **characterized in that** the said second part (P2) of the part (PM) has an elliptical cross section.

3. Device according to one of claims 1 to 2, **characterized in that** said first coupling e st realized via a first staging defined at a first interface (IC11,
IC12) between said first portion (P1) of the workpiece (PM) and said end part (PT2) of the shaft (AP) housed in said first internal bore (AI1), and said second coupling is carried out via a second step defined at a second interface (IC21, IC22) between said second part (P2) of the part (PM) and said intermediate part (PI) of the shaft (AP).

4. Device according to claim 3, **characterized in that** the said first step is defined on the said end part (PT2) of the shaft (AP) housed in the said first internal bore (AI1).

5. Device according to claim 3 or 4, **characterized in that** the said second step is defined on the said intermediate part (PI) of the shaft (AP).

6. Coupling equipment, **characterized in that** it comprises at least one mechanical device (DM) according to one of the preceding claims.

7. Equipment according to claim 6, **characterized in that** it constitutes a gearbox.

8. Vehicle comprising a transmission chain, **characterized in that** said transmission chain comprises at least one mechanical device (DM) according to one of claims 1 to 5 and/or at least coupling equipment according to claim 6 or 7.
